# EUROPEAN PATENT APPLICATION

(11) **EP 4 434 688 A1**
(43) Date of publication of application: **25.09.2024**
(21) Application number: 24165304.7
(22) Date of filing: 21.03.2024
(51) Int. Cl.: B25J 9/16

(54) **CONTROL METHOD, ROBOT SYSTEM, AND NON-TRANSITORY COMPUTER-READABLE STORAGE MEDIUM STORING PROGRAM**

(30) Priority: 23.03.2023 JP 2023046392
(71) Applicant: Seiko Epson Corporation, Tokyo 160-8801 (JP)
(72) Inventor: KIYOSAWA, Yuki, Suwa-shi, Nagano, 392-8502 (JP)
(74) Representative: MERH-IP Matias Erny Reichl Hoffmann Patentanwälte PartG mbB

(57) **Abstract**

In a control method for controlling a robot system including a robot arm, a control unit configured to control an operation of the robot arm, and a functional safety unit configured to forcibly stop the operation of the robot arm when a speed monitoring function of the robot arm is enabled and a moving speed of the robot arm exceeds a set speed limit, the method includes: detecting, by the control unit, the moving speed of the robot arm; decelerating, by the control unit, the moving speed to less than the speed limit when a predetermined condition including that the moving speed exceeds the speed limit is satisfied in a case in which a safety input signal that enables a speed limit from a safety input device is received; and enabling, by the functional safety unit, the speed monitoring function when a switching time elapses after receiving the safety input signal.

## Description

The present application is based on, and claims priority from JP Application Serial Number 2023-046392, filed March 23, 2023, the disclosure of which is hereby incorporated by reference herein in its entirety.

### BACKGROUND

### 1. Technical Field

The present disclosure relates to a control method, a robot system, and a non-transitory computer-readable storage medium storing a program.

### 2. Related Art

JP-A-2019-191928 discloses a technique related to a robot corresponding to a standard related to functional safety.

JP-A-2019-191928 is an example of the related art.

In the technique disclosed in JP-A-2019-191928, a motor speed of an industrial machine is monitored, and a motor is stopped when the motor speed is equal to or higher than a threshold value. Since a production step is stopped when the industrial machine is stopped, a technique capable of reducing a frequency of stopping the step is desired.

### SUMMARY

According to a first aspect of the present disclosure, a control method is provided. In the control method for controlling a robot system including a robot arm, a control unit configured to control an operation of the robot arm, and a functional safety unit configured to forcibly stop the operation of the robot arm when a speed monitoring function of the robot arm is enabled and a moving speed of the robot arm exceeds a set speed limit, the method includes detecting, by the control unit, the moving speed of the robot arm; decelerating, by the control unit, the moving speed to less than the speed limit when a predetermined condition including that the moving speed exceeds the speed limit is satisfied in a case in which a safety input signal that enables a speed limit from a safety input device is received; and enabling, by the functional safety unit, the speed monitoring function when a switching time elapses after receiving the safety input signal.

According to a second aspect of the present disclosure, a robot system is provided. The robot system includes: a robot arm; a control unit configured to control an operation of the robot arm; and a functional safety unit configured to forcibly stop the operation of the robot arm when a speed monitoring function of the robot arm is enabled and a moving speed of the robot arm exceeds a set speed limit. The control unit is configured to detect the moving speed of the robot arm, and decelerate the moving speed to less than the speed limit when a predetermined condition including that the moving speed exceeds the speed limit is satisfied in a case in which a safety input signal that enables a speed limit from a safety input device is received. The functional safety unit is configured to enable the speed monitoring function when a switching time elapses after receiving the safety input signal.

According to a third aspect of the present disclosure, a non-transitory computer-readable storage medium storing a program is provided. The program is executed by a computer to function as a control unit in a robot system including a robot arm, the control unit configured to control an operation of the robot arm, and a functional safety unit configured to forcibly stop the operation of the robot arm when a switching time elapses since a safety input signal enabling a speed limit is received from a safety input device and a moving speed of the robot arm exceeds a set speed limit. The program causes the computer to implement: a function of detecting the moving speed of the robot arm; and a function of decelerating the moving speed to less than the speed limit when a predetermined condition including that the moving speed exceeds the speed limit is satisfied in a case in which the safety input signal is received.

### BRIEF DESCRIPTION OF THE DRAWINGS

FIG. 1 is a schematic diagram showing an overall configuration of a robot system according to an embodiment.
FIG. 2 is a block diagram showing main parts of a robot and a robot controller.
FIG. 3 is a diagram of a warning region and a protection region.
FIG. 4 is a flowchart of processing related to speed control.
FIG. 5 is a diagram showing an example of a change in a moving speed of a control point.
FIG. 6 is a diagram showing another example of the change in the moving speed of the control point.

### DESCRIPTION OF EMBODIMENTS

### A. Embodiment:

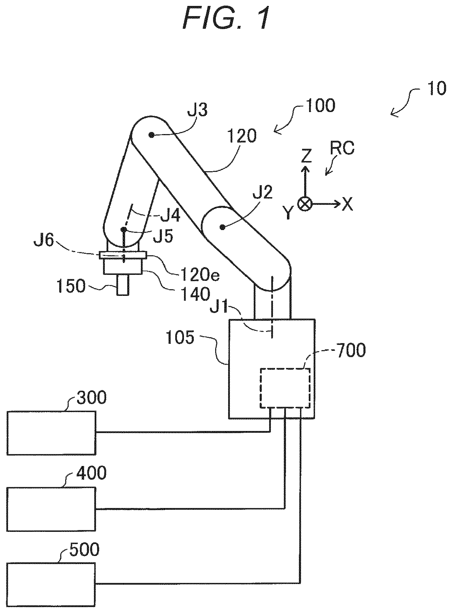

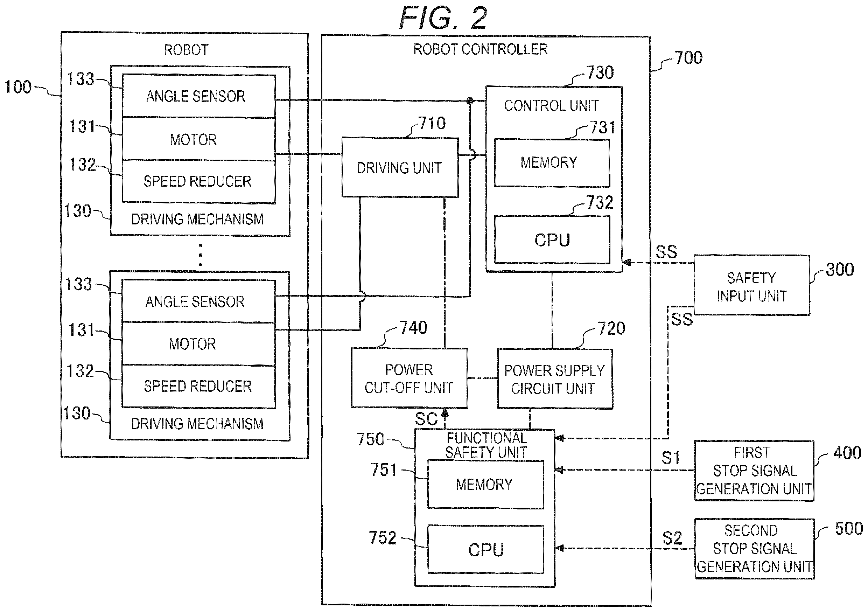

FIG. 1 is a schematic diagram showing an overall configuration of a robot system 10 according to the embodiment. FIG. 2 is a block diagram showing main parts of a robot 100 and a robot controller 700. As shown in FIG. 1, the robot system 10 includes the robot 100, a safety input unit 300, a first stop signal generation unit 400, a second stop signal generation unit 500, and the robot controller 700.

The robot 100 is a vertically articulated robot. The robot 100 is driven by the robot controller 700 and performs, for example, an assembly work which is a part of a manufacturing process in a production line. The robot 100 is also referred to as a robot arm. The robot 100 includes a base 105, an arm 120, six driving mechanisms 130, a force sensor 140, and an end effector 150. The driving mechanism 130 is not shown in FIG. 1. The base 105 supports members constituting the robot 100. The arm 120 includes six joints J1 to J6. Each of the joints J1 to J6 is provided with a corresponding driving mechanism 130.

As shown in FIG. 2, the driving mechanism 130 includes a motor 131, a speed reducer 132, and an angle sensor 133. The motor 131 is supplied with a current from the robot controller 700 and generates a rotation output for driving the corresponding joint. The speed reducer 132 converts a rotation input given from the motor 131 into a rotation output having a low rotation speed, that is, decelerates the rotation input. The angle sensor 133 detects a rotation angle (shaft position) of an output shaft of the motor 131 as a rotation angle of the joint. The angle sensor 133 detects the rotation angle at a determined time interval, and outputs the detected rotation angle together with a detection time point to the robot controller 700. The determined time interval is, for example, 100 milliseconds. The angle sensor 133 is, for example, an encoder, a potentiometer, or a resolver. The driving mechanism 130 drives the corresponding joint according to the control of the robot controller 700, so that the end effector 150 is disposed at a position designated in a robot coordinate system RC in a designated posture.

As shown in FIG. 1, the robot coordinate system RC is a coordinate system that is fixed to a position of the base 105 and defines a space in which the robot 100 is installed. The robot coordinate system RC is a three-dimensional orthogonal coordinate system defined by an X axis and a Y axis orthogonal to each other on a horizontal plane and a Z axis having a vertically upward direction as a positive direction. Any position in the robot coordinate system RC can be represented by a position in an X-axis direction, a position in a Y-axis direction, and a position in a Z-axis direction. Any posture in the robot coordinate system RC can be represented by an angular position of rotation about the X axis, an angular position of rotation about the Y axis, and an angular position of rotation about the Z axis.

The force sensor 140 is attached to an arm end 120e. In a sensor coordinate system different from the robot coordinate system RC, the force sensor 140 detects magnitudes of forces acting on the end effector 150 parallel to detection axes of the X axis, the Y axis, and the Z axis, and magnitudes of torques around the respective detection axes. The force sensor 140 outputs a detection value to the robot controller 700. The sensor coordinate system is a three-dimensional orthogonal coordinate system having a point on the force sensor 140 as an origin.

The end effector 150 is attached to the arm end 120e via the force sensor 140. The end effector 150 is a device for gripping a workpiece (not shown). In FIG. 1, in order to facilitate understanding of the technique, the end effector 150 is shown as a tubular member.

The safety input unit 300 shown in FIG. 2 generates a safety input signal SS when a person is present in a warning region AA set in advance around the robot 100. The safety input unit 300 includes a light curtain, a laser scanner, a mat switch, a door switch of a safety door, and the like for detecting the presence of a person in the warning region AA. The safety input unit 300 is also referred to as a safety input device.

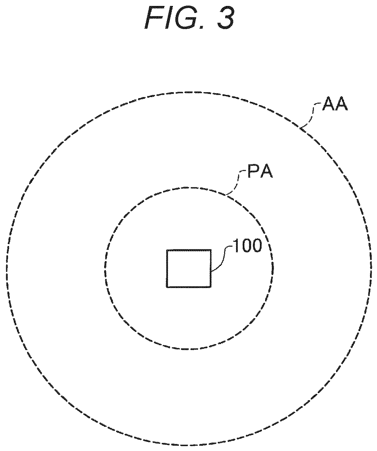

FIG. 3 is a diagram of the warning region AA set around the robot 100. In FIG. 3, the robot 100 is represented by a square. In the example shown in FIG. 3, the warning region AA is set outside a protection region PA, which is described later, around the robot 100. The warning region AA does not overlap the protection region PA. Although the warning region AA is a region that does not overlap a range in which the robot 100 can operate, in order to ensure safety, the moving speed of the robot 100 is limited by a functional safety unit 750 to be described later while the presence of a person in the warning region AA is detected.

For example, the light curtain of the safety input unit 300 is installed at a boundary of the warning region AA. While the presence of a person in the warning region AA is detected by the light curtain, the safety input unit 300 continues to output the safety input signal SS to the robot controller 700. For example, the robot 100 is surrounded by a safety fence having a safety door. While an open state of the door switch is detected, the safety input unit 300 continues to output the safety input signal SS to the robot controller 700. The safety input signal SS is a signal for switching between enabling and disabling a speed limit of the moving speed of a control point of the robot 100.

The first stop signal generation unit 400 includes an emergency stop button provided in a production facility and an emergency stop button provided in a teaching pendant. When a worker instructs to stop the robot 100 by pressing the emergency stop button provided in the production facility or the emergency stop button provided in the teaching pendant, the first stop signal generation unit 400 generates a first stop signal S1. The first stop signal S1 is a signal for notifying an instruction to perform an emergency stop of the robot 100.

The second stop signal generation unit 500 generates a second stop signal S2 when detecting that a person is present in the protection region PA set in advance around the robot 100. The second stop signal generation unit 500 includes a light curtain, a laser scanner, a mat switch, a door switch of a safety door, and the like for detecting the presence of a person in the protection region PA.

As shown in FIG. 3, the protection region PA is set inside the warning region AA around the robot 100. The protection region PA is a region overlapping a range in which the robot 100 can operate. When it is detected that a person is present in the protection region PA, the functional safety unit 750 to be described later completely stops an operation of the robot 100.

While the presence of a person in the protection region PA is detected, the second stop signal generation unit 500 continues to output the second stop signal S2 to the robot controller 700. The second stop signal S2 is a signal for notifying an instruction to perform a protection stop on the robot 100.

The robot controller 700 includes a driving unit 710, a power supply circuit unit 720, a control unit 730, a power cut-off unit 740, and the functional safety unit 750.

The driving unit 710 includes six motor drivers corresponding to the joints J1 to J6, respectively. The driving unit 710 drives the six motor drivers corresponding to the joints J1 to J6 under the control of the control unit 730. Each motor driver drives the motor 131 that rotates the corresponding joint. The driving unit 710 is disposed inside the arm 120.

The power supply circuit unit 720 converts power supplied from an external AC power supply (not shown) into DC power, and supplies the converted power to the driving unit 710, the control unit 730, and the functional safety unit 750. The power is supplied to the driving unit 710 via the power cut-off unit 740 to be described later. The power supply circuit unit 720, the control unit 730, the power cut-off unit 740, and the functional safety unit 750 are disposed inside the base 105.

The control unit 730 drives the robot 100 by controlling the driving unit 710. The control unit 730 is a computer including a memory 731 and a central processing unit (CPU) 732. Unlike the functional safety unit 750 to be described later, the control unit 730 does not need to be configured to satisfy a standard related to functional safety. The memory 731 stores programs and data used for various kinds of processing executed by the control unit 730. For example, the memory 731 stores an operation program for controlling the operation of the robot 100. The memory 731 also stores data representing the rotation angle and the detection time point output by the angle sensor 133. The CPU 732 implements various functions by executing the programs stored in the memory 731.

The control unit 730 controls, via the driving unit 710, a position of the control point of the robot 100 by changing a position and a posture of the robot 100. As a result, the end effector 150 is arranged at a target point, which is a position designated in a three-dimensional space, in a designated posture. The control point is a point serving as a reference for controlling the robot 100 in the robot coordinate system RC. For example, a tool center point (TCP), which is a center of a point at which the end effector 150 comes into contact with an object, can be set as the control point. For example, the control unit 730 controls the arm 120 and the end effector 150 according to an operation command received from a programmable logic controller (not shown).

When the control unit 730 receives the safety input signal SS that enables the speed limit of the robot 100, the control unit 730 controls the moving speed of the robot 100. In the present specification, the moving speed of the robot 100 means a moving speed of a control point of the arm 120. While the safety input signal SS is input, the control unit 730 limits the moving speed of the control point of the robot 100. Details of the limit of the moving speed will be described later.

The power cut-off unit 740 cuts off a supply of power to the driving unit 710 under the control of the functional safety unit 750. The power cut-off unit 740 includes a relay circuit. Upon receiving a cut-off signal SC from the functional safety unit 750, the power cut-off unit 740 opens the relay circuit. Therefore, the supply of power from the power supply circuit unit 720 to the driving unit 710 is cut off. The power cut-off unit 740 closes the relay circuit until the cut-off signal SC is received from the functional safety unit 750. In this case, the power is supplied from the power supply circuit unit 720 to the driving unit 710.

The functional safety unit 750 monitors the robot 100 and performs control necessary for ensuring functional safety. The functional safety is safety at an allowable level implemented by introducing a function of ensuring safety. The functional safety unit 750 is a computer including a memory 751 and a CPU 752. The functional safety unit 750 is implemented to satisfy a standard related to the functional safety. Regarding the standard related to the functional safety, for example, ISO 10218-1:2011, which is a safety standard for robots, refers to ISO 13849-1:2015 as a requirement for the functional safety. The memory 751 stores programs and data used for various kinds of processing executed by the functional safety unit 750. The CPU 752 implements various functions by executing the programs stored in the memory 751.

The functional safety unit 750 monitors whether the first stop signal S1 is input from the first stop signal generation unit 400. When the first stop signal S1 is input, the functional safety unit 750 executes an emergency stop corresponding to "safe torque off (STO)" defined in IEC 60204-1:2016. Specifically, the functional safety unit 750 outputs the cut-off signal SC to the power cut-off unit 740 to cut off the supply of power to the motor 131 of the robot 100. Therefore, the operation of the robot 100 is forcibly stopped. Alternatively, when the first stop signal S1 is input, the functional safety unit 750 executes a protection stop corresponding to "safe stop 1 (SS1)" defined in IEC 60204-1:2016. Specifically, the functional safety unit 750 stops the operation of the robot 100 via the control unit 730. Thereafter, the functional safety unit 750 outputs the cut-off signal SC to the power cut-off unit 740 to cut off the supply of power to the motor 131 of the robot 100. Therefore, the operation of the robot 100 is forcibly stopped. For example, when the emergency stop corresponding to "STO" is executed, in order to resume the operation of the robot 100, it is necessary for the worker to perform a determined return operation, including manually resetting the emergency stop button.

The functional safety unit 750 monitors whether the second stop signal S2 is input from the second stop signal generation unit 500. When the second stop signal S2 is input, the functional safety unit 750 performs the emergency stop or the protection stop corresponding to "STO" or "SS1".

The functional safety unit 750 monitors whether the safety input signal SS is input from the safety input unit 300 to the functional safety unit 750. The functional safety unit 750 enables a speed monitoring function when a predetermined switching time TS elapses after the safety input signal SS is input. The switching time TS is, for example, 500 milliseconds. While the safety input signal SS is input, the speed monitoring function of monitoring the speed of the control point of the robot 100 is enabled in the functional safety unit 750. When the speed monitoring function is enabled, the functional safety unit 750 controls the robot 100 as follows.

The functional safety unit 750 calculates the speed of the control point of the robot 100 using a detection value of the angle sensor 133, and monitors whether the speed of the control point of the robot 100 does not exceed a speed limit VL set in advance. In FIG. 2, illustration of signal lines coupling the functional safety unit 750 and the angle sensor 133 is omitted. A set value of the speed limit VL is stored in the memory 751 in advance.

When the safety input signal SS is input and the speed of the control point of the robot 100 exceeds the speed limit VL, the functional safety unit 750 performs the protection stop corresponding to "SS1". Specifically, the functional safety unit 750 stops the robot 100 via the control unit 730. Thereafter, the functional safety unit 750 outputs the cut-off signal SC to the power cut-off unit 740 to cause the power cut-off unit 740 to cut off the supply of power to the robot 100. Alternatively, when the safety input signal SS is input and the speed of the control point of the robot 100 exceeds the speed limit VL, the functional safety unit 750 may execute the emergency stop corresponding to "STO" or a protection stop corresponding to "safe stop 2 (SS2)" defined in IEC 60204-1:2016.

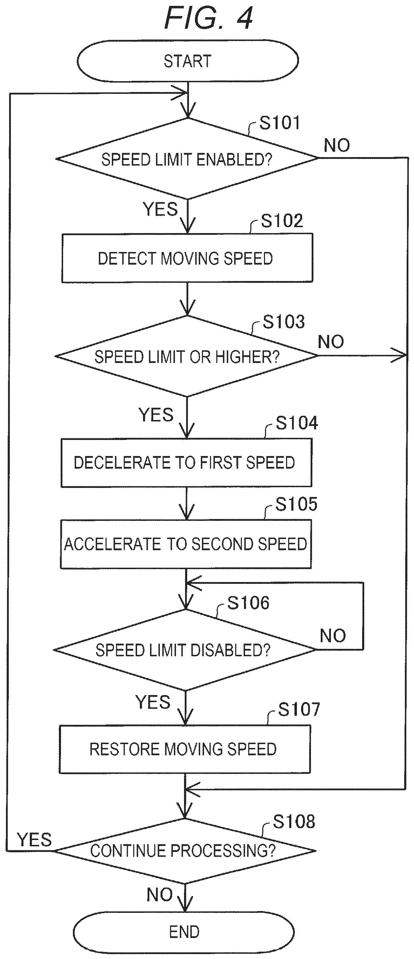

FIG. 4 is a flowchart of processing related to speed control. The processing shown in FIG. 4 is executed by the CPU 732 of the control unit 730. For example, when a user gives an instruction to start the processing via an input device (not shown), the control unit 730 starts the processing shown in FIG. 4. In parallel with the execution of the processing shown in FIG. 4, the control unit 730 operates the robot 100 so that the control point of the robot 100 moves along a scheduled movement path. Path information indicating the scheduled movement path is stored in the memory 731 in advance. The path information indicating the scheduled movement path includes information indicating positions of a start point, one or more relay points, and an end point.

In step S101, the control unit 730 determines whether a speed limit is enabled according to whether the safety input signal SS is input from the safety input unit 300. When the speed limit is enabled (step S101; YES), the control unit 730 executes processing of step S102. The safety input signal SS is input to both the control unit 730 and the functional safety unit 750. Therefore, when the switching time TS elapses from the start of an input of the safety input signal SS, the speed monitoring function of the functional safety unit 750 is enabled. When the safety input signal SS is not input and the speed limit is disabled (step S101; NO), the control unit 730 executes processing of step S108.

In step S102, the control unit 730 detects the moving speed of the robot 100. Specifically, the control unit 730 calculates a current coordinate value of the control point by calculation based on forward kinematics using rotation angles detected by the six angle sensors 133 and lengths of links constituting the arm 120. The control unit 730 calculates an immediately preceding coordinate value of the control point in the same manner using the immediately preceding rotation angles detected by the six angle sensors 133 and the lengths of the links. The control unit 730 calculates the moving speed of the control point using the current coordinate value, the immediately preceding coordinate value, and a difference between an immediately preceding detection time point obtained by the angle sensor 133 and a current detection time point obtained by the angle sensor 133, that is, a time required for the control point to move from the immediately preceding coordinate value to the current coordinate value.

In step S103, the control unit 730 determines whether the moving speed of the control point is equal to or higher than the speed limit VL. When the moving speed of the control point is equal to or higher than the speed limit VL (step S103; YES), the control unit 730 executes processing of step S104. On the other hand, when the moving speed of the control point is less than the speed limit VL (step S103; NO), the control unit 730 executes the processing of step S108. When the safety input signal SS that enables the speed limit is input from the safety input unit 300, the fact that the moving speed of the control point is equal to or higher than the speed limit VL is an example of satisfying a predetermined condition.

In step S104, the control unit 730 controls the driving unit 710 to decelerate the moving speed of the control point to a first speed V1. A set value of the first speed V1 is stored in the memory 731 in advance. In the embodiment, the first speed V1 is set to zero. Therefore, the operation of the robot 100 is stopped. At this time, the power supply to the driving unit 710 is not cut off by the power cut-off unit 740. Therefore, when the operation of the stopped robot 100 is resumed, the return operation is not necessary.

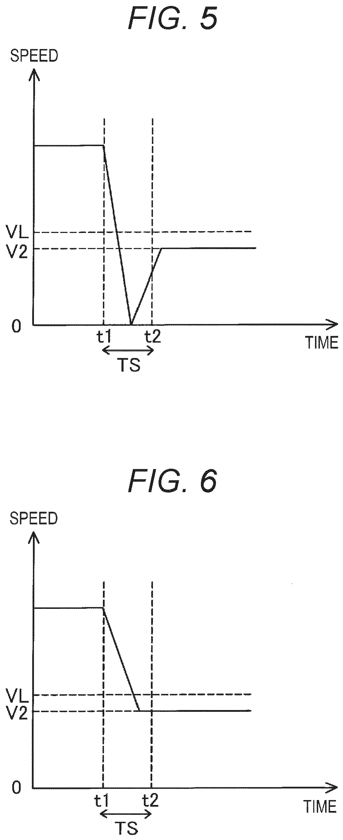

FIG. 5 is a diagram showing an example of a change in the moving speed of the control point. A time point t1 is a time point at which the safety input signal SS is input to the control unit 730. A time point t2 is a time point at which the switching time TS elapses from the time point t1. Due to the processing of step S103, the moving speed of the control point is decelerated to zero. The control unit 730 is required to decelerate the moving speed of the control point of the robot 100 to less than the speed limit VL before the switching time TS elapses, that is, before the speed monitoring function is enabled. This is to prevent the robot 100 from being forcibly stopped when the speed monitoring function is enabled and the moving speed is equal to or higher than the speed limit VL. In the illustrated example, the moving speed of the control point of the robot 100 is decelerated to the first speed V1 before the switching time TS elapses.

In step S105 shown in FIG. 4, the control unit 730 controls the driving unit 710 to operate the robot 100 again and accelerate the moving speed of the control point to a second speed V2. Therefore, the operation of the robot 100 is resumed. Thereafter, the moving speed of the control point of the robot 100 is accelerated to the second speed V2. A set value of the second speed V2 is stored in the memory 731 in advance. The second speed V2 is less than the speed limit VL and faster than the first speed V1. The second speed V2 is set to, for example, 80% of the speed limit VL.

As shown in FIG. 5, after the deceleration to zero, the moving speed of the control point is accelerated to the second speed V2, which is less than the speed limit VL, by the processing of step S105.

As shown in FIG. 4, in step S106, the control unit 730 determines whether the speed limit is disabled based on presence or absence of the input of the safety input signal SS. When the safety input signal SS is not input and the speed limit is disabled (step S106; YES), the control unit 730 executes processing of step S107. When the safety input signal SS is input and the speed limit is enabled (step S106; NO), the control unit 730 waits for a certain period of time and then executes the processing of step S106 again.

In step S107, the control unit 730 controls the driving unit 710 to change the moving speed of the control point of the robot 100 to a speed before limitation, that is, a speed before the deceleration to the first speed V1.

In step S108, the control unit 730 determines whether to continue the processing. For example, when the user gives an instruction to end the processing via an input device (not shown), the control unit 730 determines that the processing is to end. When the end of the processing is not instructed, that is, when the processing is continued (step S108; YES), the control unit 730 executes the processing of step S101 again. When the processing ends (step S108; NO), the processing shown in FIG. 4 ends.

Here, in step S106, a configuration is described in which, when the safety input signal SS is input and the speed limit is enabled (step S106; NO), the control unit 730 waits for a certain period of time and then executes the processing of step S106 again, and the present disclosure is not limited thereto. For example, when the user gives an instruction to end the processing via an input device (not shown) while the speed limit is enabled after the processing proceeds to step S106, the control unit 730 may determine to end the processing and end the processing shown in FIG. 4.

As described above, in the embodiment, the control unit 730 decelerates the moving speed of the control point of the robot 100 to less than the speed limit VL. Therefore, it is possible to prevent the functional safety unit 750 from forcibly stopping the operation of the robot 100 when the speed monitoring function is enabled. Therefore, a frequency with which the work of the robot 100 is interrupted can be reduced.

In the embodiment, since the moving speed of the control point of the robot 100 is decelerated to zero, the robot 100 temporarily stops the operation. Therefore, the worker can visually recognize that the moving speed of the robot 100 is changed. In addition, since the robot 100 temporarily stops the operation, the moving speed of the robot 100 can be reliably decelerated to less than the speed limit VL.

The moving speed of the control point of the robot 100 is decelerated to zero, and then accelerated to the second speed V2 which is less than the speed limit VL. Therefore, it is possible to quickly and reliably decelerate the moving speed of the control point to less than the speed limit VL, and thereafter, accelerate the moving speed to the second speed V2 while satisfying the condition of the speed limit VL. Accordingly, it is possible to increase operation efficiency.

In addition, for example, in a situation in which operation verification of the robot 100 is performed, the user can visually check how much the moving speed is limited by the control unit 730, and correct a program (a user program) for the operation of the robot 100 as necessary. The operation of the robot 100 can be optimized by adjusting the user program without requiring resetting of parameters related to the operation of the functional safety unit 750 implemented to satisfy the standard related to functional safety.

### B. Another Embodiments:

### B1. Another Embodiment 1:

FIG. 6 is a diagram showing another example of the change in the moving speed of the control point. In the above-described embodiment, the control unit 730 first decelerates the moving speed of the control point of the robot 100 to zero, and then accelerates the moving speed to the second speed V2. However, the control unit 730 may only decelerate the moving speed of the control point to the second speed V2. In this case, since the robot 100 does not temporarily stop, it is possible to prevent a decrease in work efficiency compared to the above-described embodiment.

### B2. Another Embodiment 2:

The control unit 730 may receive, from a user, a designation of a speed after deceleration. The user includes a worker and a supervisor. A designated speed after deceleration is also referred to as a third speed V3. For example, the user can set a designated value for the speed after deceleration in a program for the operation of the robot 100. Alternatively, the user may designate the speed after deceleration using a teaching pendant (not shown). When the safety input signal SS is input, the control unit 730 decelerates the robot 100 to the third speed V3 designated by the user. According to the aspect, the user can designate a desired moving speed after deceleration.

Alternatively, the control unit 730 may first decelerate the moving speed of the control point of the robot 100 to zero, and then accelerate the moving speed to the designated third speed V3.

### B3. Another Embodiment 3:

In the above-described embodiment, an example is described in which, when the safety input signal SS is input from the safety input unit 300, the control unit 730 normally limits the moving speed of the control point to less than the speed limit VL. Alternatively, the control unit 730 may control the robot 100 in one of a first mode in which the moving speed of the control point is limited to less than the speed limit VL and a second mode in which the moving speed of the control point is not limited to less than the speed limit VL. The user can select either the first mode in which the control unit 730 limits the moving speed of the control point or the second mode in which the control unit 730 does not limit the moving speed of the control point. When the first mode is set, when the safety input signal SS is input, the control unit 730 performs control so that the speed of the control point of the robot 100 is less than the speed limit VL. When the second mode is set, even when the safety input signal SS is input, the control unit 730 does not perform control so that the speed of the control point of the robot 100 is less than the speed limit VL. However, in either case, the speed monitoring function of the functional safety unit 750 is enabled by the input of the safety input signal SS. The first mode in which the moving speed of the control point is limited to less than the speed limit VL is an example of a predetermined condition. In this case, when the safety input signal SS is received, when the moving speed exceeds the speed limit VL and the first mode is set, the predetermined condition may be satisfied.

For example, the user can set which of the first mode and the second mode is selected in the program for the operation of the robot 100. Alternatively, the user may designate a desired mode using a teaching pendant (not shown). Therefore, the user can select whether to execute the processing of controlling the speed of the control point of the robot 100 to be less than the speed limit VL when the safety input signal SS is input from the safety input unit 300. When any one of the control modes is not selected by the user, the control unit 730 controls the robot 100 in a default first mode. For example, in a facility in which the robot 100 operates, when the worker hardly enters the warning region AA, it can be assumed that a frequency with which the speed monitoring function in the functional safety unit 750 is enabled is low. In this case, even when the second mode is set, a frequency with which the work of the robot 100 is interrupted does not increase.

### B4. Another Embodiment 4:

In the above-described embodiment, the safety input unit 300 continues to output the safety input signal SS while a person is present in the warning region AA. However, when a person enters the warning region AA, the safety input unit 300 may input the safety input signal SS to the robot controller 700 for a determined time. The safety input unit 300 may output a release signal to the robot controller 700 when the person is no longer present in the warning region AA.

In the embodiment, an example is described in which the control unit 730 obtains the speed of the control point of the robot 100 when the speed limit is enabled. Alternatively, the control unit 730 may obtain an acceleration of the control point of the robot 100. In this case, the control unit 730 controls the robot 100 so that the acceleration of the control point of the robot 100 is less than a limit acceleration.

Although an example in which one control point is set is described in the embodiments, two or more control points may be set. For example, the TCP and the joint J3 corresponding to a human elbow joint may be set as the control points.

In the embodiment, although an example in which the functional safety unit 750 is implemented to satisfy the standard related to functional safety is described, the functional safety unit 750 may not be implemented to satisfy the standard related to the functional safety.

Although an example of a six-axis vertically articulated robot is described in the embodiments, the robot 100 may be any robot including an arm. The robot 100 may be, for example, a SCARA robot.

The present disclosure is not limited to the embodiments described above, and can be implemented in various aspects without departing from the gist of the present disclosure. For example, technical features of the embodiments described above corresponding to technical features in the embodiments described in the summary can be replaced or combined as appropriate in order to solve a part or all of problems, or in order to achieve a part or all of effects described above. The technical features can be deleted as appropriate unless described as being essential in the specification.

### C. Other Aspects:

(1) According to a first aspect of the present disclosure, a control method is provided. In the control method for controlling a robot system including a robot arm, a control unit configured to control an operation of the robot arm, and a functional safety unit configured to forcibly stop the operation of the robot arm when a speed monitoring function of the robot arm is enabled and a moving speed of the robot arm exceeds a set speed limit, the method includes detecting, by the control unit, the moving speed of the robot arm; decelerating, by the control unit, the moving speed to less than the speed limit when a predetermined condition including that the moving speed exceeds the speed limit is satisfied in a case in which a safety input signal that enables a speed limit from a safety input device is received; and enabling, by the functional safety unit, the speed monitoring function when a switching time elapses after receiving the safety input signal.
   According to the above aspect, it is possible to prevent the functional safety unit from forcibly stopping the operation of the robot arm by the control unit decelerating the moving speed of the robot arm to less than the speed limit. Therefore, a frequency with which the work of the robot arm is interrupted can be reduced.
(2) In the above aspect, in the decelerating, the moving speed of the robot arm is decelerated to a first speed that is less than the speed limit, and the control method may further include: after execution of the decelerating, accelerating the moving speed to a second speed that is less than the speed limit and faster than the first speed.
   According to the above aspect, it is possible to quickly and reliably decelerate the moving speed of the control point of the robot arm to less than the speed limit, and thereafter, accelerate the moving speed to the second speed while satisfying a condition of the speed limit. Accordingly, it is possible to increase operation efficiency.
(3) In the above aspect, the first speed may be zero.
   According to the above aspect, since the moving speed of the robot arm is decelerated to zero, a user can visually recognize that the moving speed of the robot arm is changed. In addition, since the robot arm temporarily stops the operation, the moving speed of the robot arm can be reliably decelerated to less than the speed limit.
(4) In the above aspect, the control method further includes: receiving, before execution of the decelerating, a designation of a third speed that is less than the speed limit. In the decelerating, the moving speed of the robot arm may be decelerated to the third speed.
   According to the above aspect, the user can designate the moving speed after deceleration.
(5) In the above aspect, the control unit includes a first mode in which the moving speed is limited to less than the speed limit, and a second mode in which the moving speed is not controlled to less than the speed limit. The control method further includes: receiving a designation as to which of the first mode and the second mode is to be set. The predetermined condition may be satisfied when the moving speed exceeds the speed limit and the first mode is set in the case in which the safety input signal is received.
   According to the above aspect, the user can select whether to execute the processing of controlling the speed of the control point of the robot to be less than the speed limit when the safety input signal is input from a safety input device.
(6) In the above aspect, the functional safety unit may be configured to satisfy a standard related to functional safety.
(7) According to a second aspect of the present disclosure, a robot system is provided. The robot system includes: a robot arm; a control unit configured to control an operation of the robot arm; and a functional safety unit configured to forcibly stop the operation of the robot arm when a speed monitoring function of the robot arm is enabled and a moving speed of the robot arm exceeds a set speed limit. The control unit is configured to detect the moving speed of the robot arm, and decelerate the moving speed to less than the speed limit when a predetermined condition including that the moving speed exceeds the speed limit is satisfied in a case in which a safety input signal that enables a speed limit from a safety input device is received. The functional safety unit is configured to enable the speed monitoring function when a switching time elapses after receiving the safety input signal.
   According to the above aspect, it is possible to prevent the functional safety unit from forcibly stopping the operation of the robot arm by the control unit decelerating the moving speed of the robot arm to less than the speed limit. Therefore, a frequency with which the work of the robot arm is interrupted can be reduced.
(8) According to a third aspect of the present disclosure, a non-transitory computer-readable storage medium storing a program is provided. The program is executed by a computer to function as a control unit in a robot system including a robot arm, the control unit configured to control an operation of the robot arm, and a functional safety unit configured to forcibly stop the operation of the robot arm when a switching time elapses since a safety input signal enabling a speed limit is received from a safety input device and a moving speed of the robot arm exceeds a set speed limit. The program causes the computer to implement: a function of detecting the moving speed of the robot arm; and a function of decelerating the moving speed to less than the speed limit when a predetermined condition including that the moving speed exceeds the speed limit is satisfied in a case in which the safety input signal is received.

According to the above aspect, it is possible to prevent the functional safety unit from forcibly stopping the operation of the robot arm by the control unit decelerating the moving speed of the robot arm to less than the speed limit. Therefore, a frequency with which the work of the robot arm is interrupted can be reduced.

## Claims

1. A control method for controlling a robot system including a robot arm, a control unit configured to control an operation of the robot arm, and a functional safety unit configured to forcibly stop the operation of the robot arm when a speed monitoring function of the robot arm is enabled and a moving speed of the robot arm exceeds a set speed limit, the method comprising:
detecting, by the control unit, the moving speed of the robot arm;
decelerating, by the control unit, the moving speed to less than the speed limit when a predetermined condition including that the moving speed exceeds the speed limit is satisfied in a case in which a safety input signal that enables a speed limit from a safety input device is received; and
enabling, by the functional safety unit, the speed monitoring function when a switching time elapses after receiving the safety input signal.

2. The control method according to claim 1, wherein
in the decelerating, the moving speed of the robot arm is decelerated to a first speed that is less than the speed limit, and
the control method further includes:
after execution of the decelerating, accelerating the moving speed to a second speed that is less than the speed limit and faster than the first speed.

3. The control method according to claim 2, wherein
the first speed is zero.

4. The control method according to claim 1, further comprising:
receiving, before execution of the decelerating, a designation of a third speed that is less than the speed limit, wherein
in the decelerating, the moving speed of the robot arm is decelerated to the third speed.

5. The control method according to claim 3, wherein
the control unit includes
a first mode in which the moving speed is limited to less than the speed limit, and
a second mode in which the moving speed is not controlled to less than the speed limit,
the control method further includes:
receiving a designation as to which of the first mode and the second mode is to be set, and
the predetermined condition is satisfied when the moving speed exceeds the speed limit and the first mode is set in the case in which the safety input signal is received.

6. The control method according to claim 5, wherein
the functional safety unit is configured to satisfy a standard related to functional safety.

7. A robot system comprising:
a robot arm;
a control unit configured to control an operation of the robot arm; and
a functional safety unit configured to forcibly stop the operation of the robot arm when a speed monitoring function of the robot arm is enabled and a moving speed of the robot arm exceeds a set speed limit, wherein
the control unit is configured to
detect the moving speed of the robot arm, and
decelerate the moving speed to less than the speed limit when a predetermined condition including that the moving speed exceeds the speed limit is satisfied in a case in which a safety input signal that enables a speed limit from a safety input device is received, and
the functional safety unit is configured to enable the speed monitoring function when a switching time elapses after receiving the safety input signal.

8. A non-transitory computer-readable storage medium storing a program executed by a computer that functions as a control unit in a robot system, the robot system including a robot arm, the control unit configured to control an operation of the robot arm, and a functional safety unit configured to forcibly stop the operation of the robot arm when a switching time elapses since a safety input signal enabling a speed limit is received from a safety input device and a moving speed of the robot arm exceeds a set speed limit,
the program causing the computer to implement:
a function of detecting the moving speed of the robot arm; and
a function of decelerating the moving speed to less than the speed limit when a predetermined condition including that the moving speed exceeds the speed limit is satisfied in a case in which the safety input signal is received.
